# EUROPÄISCHE PATENTSCHRIFT

(11) **EP 0 827 436 B1**
(45) Veröffentlichungstag und Bekanntmachung des Hinweises auf die Patenterteilung: **16.09.1998**
(21) Anmeldenummer: 96919777.1
(22) Anmeldetag: 15.05.1996
(51) Int. Cl.: B23D 63/12, B24B 53/00, B24B 53/12

(54) **VORRICHTUNG ZUM BAHNGESTEUERTEN SCHÄRFEN VON SÄGEVERZAHNUNGEN**
DEVICE FOR THE CONTOURED SHARPENING OF SAW TEETH
DISPOSITIF POUR L'AIGUISAGE A COMMANDE DE CONTOURNAGE DE DENTURES DE SCIES

(30) Priorität: 22.05.1995 DE 19518710
(43) Veröffentlichungstag der Anmeldung: 11.03.1998
(73) Patentinhaber: VOLLMER WERKE MASCHINENFABRIK GMBH, D-88400 Biberach (DE)
(72) Erfinder: HENSINGER, Bruno, D-88471 Laupheim (DE); LENARD, Peter, D-88400 Biberach (DE)
(74) Vertreter: Goetz, Rupert, Dipl.-Ing.
(86) Internationale Anmeldenummer: EP9602095
(87) Internationale Veröffentlichungsnummer: WO9637327

(56) Entgegenhaltungen:
- DE-A- 2 921 196
- DE-A- 3 740 199
- DE-U- 9 400 697
- FR-A- 2 465 547

## Beschreibung

Die Erfindung betrifft eine Vorrichtung nach dem Oberbegriff des Anspruchs 1.

Bei solchen Vorrichtungen werden der Schleifschlitten einerseits und der Vorschubschlitten andererseits von einer CNC-Steuerung oder einer Nockensteuerung so gesteuert, daß die Schleifscheibe jeweils entlang einer Zahnbrust in eine Zahnlücke der Verzahnung eines Sägeblattes eintaucht, während der Vorschubschlitten stillsteht. Sobald die Schleifscheibe den Zahngrund erreicht hat, beginnt eine Vorschubbewegung des Sägeblattes, die dadurch bewirkt wird, daß ein am Vorschubschlitten gelagerter Mitnehmer in Gestalt eines Fingers oder einer Klinke an einer benachbarten Zahnbrust angreift. Während der Vorschubbewegung taucht die Schleifscheibe im allgemeinen noch tiefer in den Zahngrund ein und wird dann allmählich zurückgezogen, um den angrenzenden Zahnrücken und schließlich dessen obersten, zur Zahnspitze gehörigen Teil, die sogenannte Freifläche, zu schärfen. Für ein derartiges bahngesteuertes Schärfen von Sägeverzahnungen ist eine Schleifscheibe erforderlich, die an ihrem Rand ein dem Verzahnungsprofil in bestimmter Weise angepaßtes Profil aufweist.

Durch Verschleiß erhält der Schleifscheibenrand allmählich ein abweichendes Profil; es ist deshalb erforderlich, die Schleifscheibe von Zeit zu Zeit abzurichten. Bekannt sind hierfür punktförmig an der Schleifscheibe angreifende Abrichtdiamanten, die in einem eigenen, von der Schleifvorrichtung unabhängigen Koordinatensystem bahngesteuert bewegbar sind. Ebenfalls bekannt sind Diamant-Abrichtrollen, die komplementär zum vorgesehenen Randprofil der Schleifscheibe profiliert und ebenfalls in einer eigenen Vorrichtung in mindestens zwei Koordinaten verstellbar gehalten sind, so daß sie bei stillstehendem Schleifschlitten mit der sich nur noch drehenden Schleifscheibe in Eingriff bringbar sind.

Der Erfindung liegt die Aufgabe zugrunde, das Abrichten von Schleifscheiben an einer Vorrichtung zum bahngesteuerten Schärfen von Sägeverzahnungen zu vereinfachen und den Zeitbedarf für jeden Abrichtvorgang zu verkürzen.

Die Aufgabe ist erfindungsgemäß mit den Merkmalen des Anspruchs 1 gelöst. Vorteilhafte Weiterbildungen sind Gegenstand der Unteransprüche.

Das erfindungsgemäße Abrichtwerkzeug, das vorzugsweise ein mindestens zum Teil aus polykristallinem Diamant bestehendes kreisförmiges Plättchen ist, beansprucht wenig Platz und läßt sich deshalb am Vorschubschlitten in unmittelbarer Nachbarschaft des Sägeblattes raumsparend in einer Ruhestellung unterbringen, in der das Abrichtwerkzeug das Schärfen von Sägeverzahnungen nicht behindert. In den Schärfintervallen braucht das Abrichtwerkzeug deshalb nur einen kurzen Weg aus seiner Ruhestellung in seine Abrichtstellung zurückzulegen, um die Voraussetzung dafür zu schaffen, daß die Schleifscheibe anstatt mit der Sägeverzahnung nun mit dem Abrichtwerkzeug zusammenwirkt, von dem sie in einem einzigen Arbeitszyklus des Schleifschlittens und des Vorschubschlittens abgerichtet wird. Vom normalen Betrieb beim Schärfen von Sägeverzahnungen unterscheidet sich die Arbeitsweise beim Abrichten des Abrichtwerkzeugs nur dadurch, daß der Vorschubfinger während der Abrichtintervalle in seiner Ruhestellung festgesetzt wird, das Abrichtwerkzeug am Vorschubschlitten in seine Abrichtstellung bewegt wird, und die Bewegungen des Schleifschlittens sowie des Vorschubschlittens durch Umschalten der Steuerung auf den Abrichtmodus an das gewünschte Profil der Schleifscheibe angepaßt werden. Eine gegenüber der normalen Ausstattung einer Sägenschärfmaschine zusätzliche, gesteuerte Achse ist für das Abrichten der Schleifscheibe nicht erforderlich.

Ein Ausführungsbeispiel der Erfindung wird im folgenden anhand schematischer Zeichnungen mit weiteren Einzelheiten erläutert. Es zeigen:

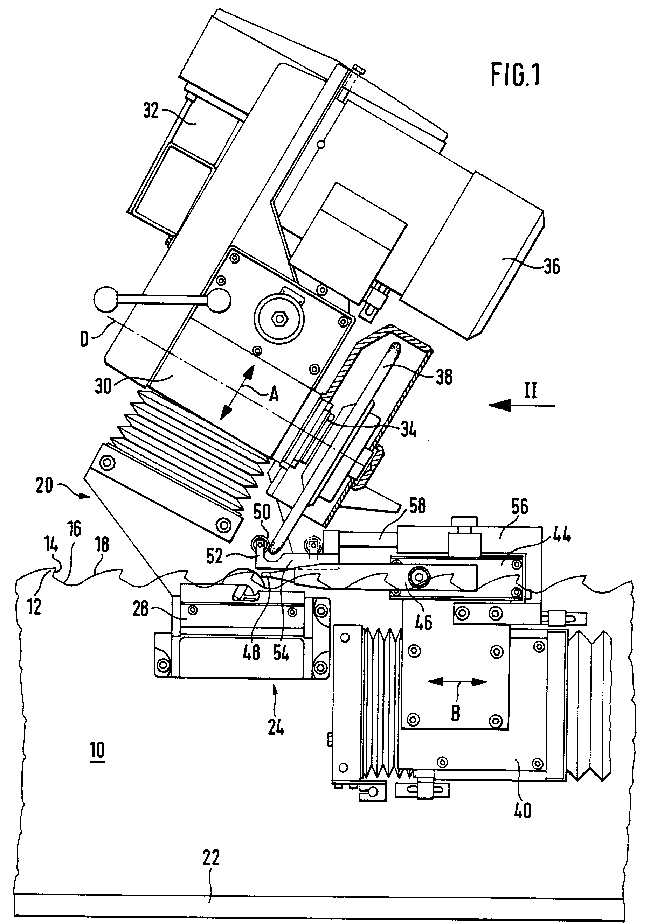

- Fig.1: die Vorderansicht einer erfindungsgemäßen Vorrichtung und

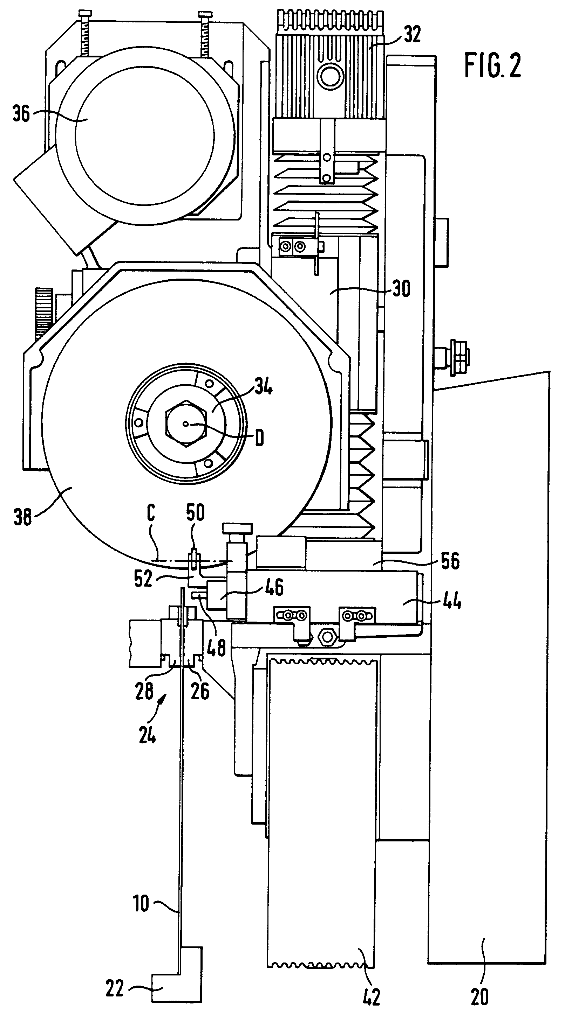

- Fig.2: die Seitenansicht in Richtung des Pfeils II in Fig.1.

In den Zeichnungen ist als Beispiel eines Sägeblattes 10, dessen Verzahnung zu schärfen ist, ein Bandsägeblatt dargestellt; unter Sägeblatt ist aber im vorliegenden Zusammenhang ebensogut ein Gattersägeblatt oder ein Kreissägeblatt zu verstehen. In jedem Fall handelt es sich um ein Sägeblatt 10 mit Zähnen 12, die an ihrer Zahnbrust 14 und zusätzlich an ihrem Zahngrund 16 und Zahnrücken 18 in einem bahngesteuerten Schärfvorgang bearbeitet werden.

Die Vorrichtung zum Schärfen des Sägeblattes 10 hat ein Maschinengestell 20 mit einer Sägeblattführung 22, die im dargestellten Beispiel von einer waagerechten Schiene gebildet und entsprechend der Breite des Sägeblattes 10 höheneinstellbar ist. Oberhalb der Sägeblattführung 22 ist eine Sägeblatthalterung 24 angeordnet, die im dargestellten Beispiel einen ortsfesten Backen 26 und einen verstellbaren Backen 28 aufweist. Der verstellbare Backen 28 ist in üblicher Weise in Richtung zum ortsfesten Backen 26 hin vorgespannt, so daß das Sägeblatt 10 zwischen den Backen schwingungsfrei gehalten ist, ohne an einer Vorschubbewegung gehindert zu sein.

Am Maschinengestell 20 ist ein Schleifschlitten 30 unter einem einstellbaren Winkel in Bezug zur Sägeblattführung 22 in Richtung des Doppelpfeils A mittels eines Hubantriebs 32 auf- und abbewegbar. Am Schleifschlitten 30 ist eine Schleifspindel 34 gelagert, die von einem Motor 36 drehantreibbar ist und eine Schleifscheibe 38 trägt.

Am Maschinengestell 20 ist ferner ein Vorschubsschlitten 40 parallel zur Sägeblattführung 22 im Sinne des Doppelpfeils B mittels eines Vorschubantriebs 42 hin- und herbewegbar. Der Vorschubschlitten 40 trägt einen normal zur Ebene des Sägeblattes 10 bewegbaren Querschlitten 44, an dem ein zur Ebene des Sägeblattes 10 paralleler Vorschubarm 46 angeordnet ist. Der Vorschubarm 46 weist an seinem vorderen Ende einen zur Ebene des Sägeblattes 10 normalen Vorschubfinger 48 auf und ist derart einstellbar, daß der Vorschubfinger bei jedem Arbeitshub an die Zahnbrust 14 eines Zahns 12 anlegbar ist, um das Sägeblatt 10 je nach Einstellung des Vorschubantriebs 42 um eine oder mehrere Zahnteilungen vorwärts zu schieben. Der Querschlitten 44 ist aus seiner abgebildeten Arbeitsstellung in eine Ruhestellung zurückziehbar, in welcher der Vorschubfinger 48 die Ebene des Sägeblatts 10 nicht erreicht; in dieser Ruhestellung ist der Vorschubschlitten 42 im Sinne des Doppelpfeils B hin- und herbewegbar ohne daß das Sägeblatt 10 vorgeschoben wird.

Zum Abrichten der Schleifscheibe 28 ist ein scheibenförmiges Abrichtwerkzeug 50 vorgesehen, das entweder ein ganz aus polykristallinem Diamant (PKD) bestehendes Plättchen oder ein Verbundplättchen ist, bei der eine oder mehrere PKD-Platten auf ein Hartmetallplättchen aufgelötet oder aufgeklebt sind, das seinerseits durch ein Stahlplättchen verstärkt sein kann. Das Abrichtwerkzeug 50 hat einen kreisförmigen äußeren Umriß und ein zentrales Loch, mit dem es auswechselbar an einem Werkzeughalter 52 festgeklemmt ist. Dieser ist im dargestellten Beispiel gabelförmig und hat einen zentralen Zapfen, der in das zentrale Loch des Abrichtwerkzeugs eingreift. Der Werkzeughalter 52 nimmt somit das Abrichtwerkzeug 50 um eine zur Ebene des Sägeblattes 10 sowie zur Vorschubrichtung (Pfeil B) normale Achse C dreheinstellbar auf, so daß es, wenn es einseitig abgenützt ist, um z.B. 180° gedreht, wieder festgespannt und weiterverwendet werden kann.

Der Werkzeughalter 52 ist an einem Werkzeugschlitten 54 so befestigt, daß das Abrichtwerkzeug 50 in enger Nachbarschaft zur Ebene des Sägeblattes 10 in einer dazu parallelen Ebene angeordnet ist. Aus der abgebildeten Abrichtstellung, die durch einen einstellbaren Anschlag festgelegt ist, läßt sich der Werkzeugschlitten 54 samt Abrichtwerkzeug 50 mittels einer Kolbenzylindereinheit 56 parallel zur Vorschubrichtung B in eine Ruhestellung zurückziehen, in der das Abrichtwerkzeug 50 weder von der Schleifscheibe 38 noch vom Vorschubfinger 48 berührt werden kann. Die Kolbenzylindereinheit 56 ist am Vorschubschlitten 40, und ihre Kolbenstange 58 am Werkzeughalter 52 befestigt.

Die Bewegungen des Schleifschlittens 30 und des Vorschubschlittens 40 werden von einer Steuerung ansich bekannter Art gesteuert, die eine elektronische CNC-Steuerung, Nockensteuerung od. dgl. sein kann. Das Schleifen geschieht nach einem Schleifmodus, bei dem die genannten Bewegungen in üblicher Weise entsprechend der Form der Verzahnung miteinander koordiniert sind.

Zum Abrichten der Schleifscheibe 38 wird die Steuerung auf einen Abrichtmodus umgeschaltet, der Querschlitten 44 wird in seine Ruhestellung verschoben und dort festgehalten, so daß der Vorschubfinger 48 nicht in die Verzahnung des Sägeblattes 10 eingreifen kann, und dann wird das Abrichtwerkzeug 50 in seine Abrichtstellung vorgeschoben. All dies geschieht unmittelbar nach einem normalen Rückhub des Schleifschlittens 30. Der nächste Abwärtshub des Schleifschlittens 30 und die damit koordinierte Vorwärtsbewegung des Vorschubschlittens 40 werden entweder CNC-gesteuert oder durch Umstellen eines die beiden Schlitten norma-lerweise antreibenden Nockengetriebes so verändert, daß die Schleifscheibe 38 nicht in das Sägeblatt 10 eintaucht sondern nur noch mit dem Abrichtwerkzeug 50 zusammenwirkt, dessen Abrichtstellung etwas höher liegt als die Verzahnung des Sägeblattes 10. Diese koordinierten Bewegungen bestimmen die Form, den der Rand der Schleifscheibe 38 durch das Abrichten erhält.

Anschließend an den nächsten Aufwärtshub wird die Steuerung wieder auf den ursprünglichen Schleifmodus umgeschaltet, bei dem Hubantrieb 32 und Vorschubantrieb 42 wieder entsprechend dem Verzahnungsprofil miteinander koordiniert sind. Dabei wird aber der Betrag, um den sich der Radius der Schleifscheibe 38 durch das Abrichten verringert hat, durch Verschieben des unteren Endes der Bewegungsstrecke des Schleifschlittens 30 kompensiert. Gleichzeitig wird das Abrichtwerkzeug 50 in seine Ruhestellung zurückgezogen. Schon der nächste Zyklus kann wieder ein normaler Schärfzyklus sein, bei dem das Schärfen des Sägeblattes 10 fortgesetzt wird.

## Patentansprüche

1. Vorrichtung zum bahngesteuerten Schärfen von Sägeverzahnungen mit
- einer Sägeblatthalterung (24),
- einem Schleifschlitten (30), der eine profilierte Schleifscheibe (38) trägt und in bezug auf die Sägeblatthalterung (24) hubweise hin- und herbewegbar ist, und
- einem Vorschubschlitten (40), an dem ein Vorschubfinger (48) aus einer Ruhestellung in eine Mitnahmestellung bewegbar ist, in der er nach einer Rückzugsbewegung des Vorschubschlittens (40) hinter einem Zahn (12) eines Sägeblattes (10) einrastet und dieses bei der nächsten Vorschubbewegung mitnimmt,
dadurch gekennzeichnet, daß
- der Vorschubfinger (48) in Abrichtintervallen in seiner Ruhestellung festsetzbar ist,
- am Vorschubschlitten (40) ein Abrichtwerkzeug (50) so angeordnet ist, daß es in den Abrichtintervallen aus einer Ruhestellung in eine Abrichtstellung bewegbar ist, und
- dem Schleifschlitten (30) und dem Vorschubschlitten (40) eine Steuerung zugeordnet ist, die von einem Schleifmodus, bei dem die Bewegungen der beiden Schlitten entsprechend der Kontur der Sägeverzahnung koordiniert sind, in einen Abrichtmodus umschaltbar ist, bei dem die Bewegungen der beiden Schlitten entsprechend der Kontur der Schleifscheibe (38) koordiniert sind.

2. Vorrichtung nach Anspruch 1,
dadurch gekennzeichnet, daß das Abrichtwerkzeug (50) in seiner Abrichtstellung annähernd in der Ebene des Sägeblatts (10) angeordnet ist.

3. Vorrichtung nach Anspruch 1 oder 2,
dadurch gekennzeichnet, daß das Abrichtwerkzeug (50) in einer zum Sägeblatt (10) parallelen Richtung aus seiner Ruhestellung in seine Abrichtstellung verschiebbar am Vorschubschlitten (40) geführt ist.

4. Vorrichtung nach einem der Ansprüche 1 bis 3,
dadurch gekennzeichnet, daß das Abrichtwerkzeug (50) auswechselbar an einem Werkzeughalter (52) befestigt ist.

5. Vorrichtung nach Anspruch 4,
dadurch gekennzeichnet, daß das Abrichtwerkzeug (50) am Werkzeughalter (52) in mehreren Stellungen festklemmbar und somit nach Verschleiß eines Teils seines Umrisses in einer geänderten Stellung weiterverwendbar ist.

6. Vorrichtung nach einem der Ansprüche 1 bis 5,
dadurch gekennzeichnet, daß das Abrichtwerkzeug (50) eine mindestens teilweise aus polykristallinem Diamant bestehende Scheibe ist.

## Claims

1. An apparatus for the continuous path-controlled sharpening of saw toothings, comprising
- a saw blade holder (24),
- a grinding slide (30) which carries a profiled grinding wheel (38) and is movable to and fro in a strokewise manner with respect to the saw blade holder (24), and
- a feed slide (40) at which a feed finger (48) can be moved from an inoperative position into a driving position in which it engages after a return motion of the feed slide (40) behind a tooth (12) of a saw blade (10) driving same during the next feed motion,
characterized in that
- the feed finger (48) is adapted to be rendered stationary in its inoperative position during dressing intervals,
- a dressing tool (50) is arranged at the feed slide (40) in such a manner that it can be moved in the dressing intervals from an inoperative position into a dressing position, and
- the grinding slide (30) and the feed slide (40) are assigned a control system which is adapted to be switched from a grinding mode in which the motions of the two slides are coordinated corresponding to the profile of the saw toothing to a dressing mode in which the motions of the two slides are coordinated corresponding to the profile of the grinding wheel (38).

2. The apparatus according to Claim 1,
characterized in that the dressing tool (50) in its dressing position is arranged approximately in the plane of the saw blade (10).

3. The apparatus according to Claim 1 or 2,
characterized in that the dressing tool (50) is guided at the feed slide (40) so as to be movable from its inoperative position into its dressing position in a direction parallel to the saw blade (10).

4. The apparatus according to one of Claims 1 to 3,
characterized in that the dressing tool (50) is replaceably attached at a tool holder (52).

5. The apparatus according to Claim 4,
characterized in that the dressing tool (50) is adapted to be clamped in several positions at the tool holder (52) and thus to be capable of being used further in a changed position after part of its periphery is worn.

6. The apparatus according to one of Claims 1 to 5,
characterized in that the dressing tool (50) is a disc which at least partially consists of polycrystalline diamond.

## Revendications

1. Dispositif pour l'affûtage à commande de contournage de dentures de scies, comportant
- un porte-lame de scie (24),
- un chariot d'affûtage (30) qui porte une meule profilée (38) et peut, course par course, prendre un mouvement de va-et-vient par rapport au porte-lame de scie (24) et
- un chariot d'avance (40) sur lequel un doigt d'avance (48) peut se déplacer pour passer, de sa position de repos, dans une position d'entraînement dans laquelle, après un mouvement de recul du chariot d'avance (40), il se crante derrière une dent (12) d'une lame de scie (10) et entraîne celle-ci lors du mouvement d'avance suivant,
caractérisé par le fait
- que le doigt d'avance (48) peut se fixer dans sa position de repos dans les intervalles de dressage ,
- que sur le chariot d'avance (40), un outil de dressage (50) est disposé de façon que dans les intervalles de dressage il puisse passer de sa position de repos à sa position de dressage et
- qu'au chariot d'affûtage (30) et au chariot d'avance (40) est associé un circuit de commande qui, depuis un mode affûtage, dans le cas duquel les déplacements des deux chariots sont coordonnés en fonction du contour de la denture de la dent, peut commuter dans un mode dressage dans le cas duquel les déplacements des deux chariots sont coordonnés en fonction du contour de la meule (38).

2. Dispositif selon la revendication 1,
caractérisé par le fait que, dans sa position de dressage, l'outil de dressage (50) est à peu près disposé dans le plan de la lame de scie (10).

3. Dispositif selon la revendication 1 ou 2,
caractérisé par le fait que l'outil de dressage (50) est guidé sur le chariot d'avance (40) avec possibilité de passer, selon une direction parallèle à la lame de scie (10), de sa position de repos à sa position de dressage.

4. Dispositif selon l'une des revendication 1 à 3,
caractérisé par le fait que l'outil de dressage (50) est fixé sur un porte-outil (52) avec possibilité d'échange.

5. Dispositif selon la revendication 4,
caractérisé par le fait que l'outil de dressage (50) peut être bridé sur le porte-outil (52) en plusieurs positions et que, par conséquent, après usure d'une partie de son contour, il peut être réemployé dans une autre position.

6. Dispositif selon l'une des revendication 1 à 5,
caractérisé par le fait que l'outil de dressage (50) est un disque constitué au moins partiellement de diamant polycristallin.
